(19) Europäisches Patentamt / European Patent Office / Office européen des brevets

(11) **EP 4 629 312 A1**

(12) **EUROPEAN PATENT APPLICATION**
published in accordance with Art. 153(4) EPC

(43) Date of publication:
08.10.2025 Bulletin 2025/41

(21) Application number: 23914935.4

(22) Date of filing: 13.11.2023

(51) International Patent Classification (IPC):
$H01M\ 4/13^{(2010.01)}$   $H01M\ 10/052^{(2010.01)}$
$H01M\ 4/525^{(2010.01)}$   $H01M\ 4/505^{(2010.01)}$
$H01M\ 4/587^{(2010.01)}$   $H01M\ 4/02^{(2006.01)}$

(52) Cooperative Patent Classification (CPC):
H01M 4/02; H01M 4/13; H01M 4/505; H01M 4/525;
H01M 4/587; H01M 10/052

(86) International application number:
PCT/KR2023/018168

(87) International publication number:
WO 2024/147471 (11.07.2024 Gazette 2024/28)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 02.01.2023 KR 20230000307

(71) Applicant: SK On Co., Ltd.
Seoul 03161 (KR)

(72) Inventors:
• LEE, Yoon Ji
Daejeon 34124 (KR)
• KIM, Eun Jin
Daejeon 34124 (KR)
• DO, Young Hoon
Daejeon 34124 (KR)
• KIM, Hong Ki
Daejeon 34124 (KR)

(74) Representative: Prüfer & Partner mbB
Patentanwälte · Rechtsanwälte
Sohnckestraße 12
81479 München (DE)

(54) **LITHIUM SECONDARY BATTERY**

(57) A lithium secondary battery according to embodiments of the present disclosure includes a cathode including a cathode active material and an anode including an anode active material. A ratio of a median particle diameter of the cathode active material to that of the anode active material may be adjusted within a predetermined range. In addition, a ratio of a span value of the cathode active material to that of the anode active material may be adjusted within a predetermined range.

[FIG. 1]

EP 4 629 312 A1

**Description**

[Technical Field]

The present disclosure relates to a lithium secondary battery.

[Background Art]

A secondary battery is a battery that can be repeatedly charged and discharged. With the rapid progress of information and communication technology and display industries, the secondary battery has been widely applied to various portable electronic telecommunication devices such as a camcorder, a mobile phone, a laptop computer, etc. as their power sources. Recently, a battery pack including the secondary battery has also been developed and applied to eco-friendly automobiles such as an electric vehicle, a hybrid vehicle, etc., as their power sources.

Examples of the secondary battery may include a lithium secondary battery, a nickelcadmium battery, a nickel-hydrogen battery and the like. Among them, the lithium secondary battery has a high operating voltage and a high energy density per unit weight, making it advantageous in terms of charging speed and lightweight design. In this regard, the lithium secondary battery has been actively developed and applied to various industrial fields.

For example, the lithium secondary battery may include: an electrode assembly including a cathode, an anode, and a separation membrane (separator); and an electrolyte in which the electrode assembly is impregnated. The lithium secondary battery may further include, for example, a pouch-type outer case in which the electrode assembly and the electrolyte are housed.

The cathode and the anode may each include a cathode active material and an anode active material having activity for lithium ions. As the application range of lithium secondary batteries expands, a longer cycle life, higher capacity, and higher energy density are required. However, when the energy density, capacity, and output of the lithium secondary battery are increased, the stability and capacity retention rate of the cathode active material may degrade. In addition, when the cycle properties of the lithium secondary battery are increased, the efficiency and output of the anode active material may decrease.

[Summary of Invention]

[Problems to be Solved by Invention]

An object of the present disclosure is to provide a lithium secondary battery with improved output properties and stability.

[Means for Solving Problems]

A lithium secondary battery according to exemplary embodiments of the present disclosure may include: a cathode including a cathode active material; and an anode including an anode active material and disposed to face the cathode. A ratio (Dp50/Dn50) of a median particle diameter (Dp50) of the cathode active material to a median particle diameter (Dn50) of the anode active material may be 0.3 to 0.5, and a ratio (Sp/Sn) of a span value (Sp) of the cathode active material to a span value (Sn) of the anode active material may be less than 1.

In some embodiments, the median particle diameter of the cathode active material may be greater than 0 $\mu$m and 5.5 $\mu$m or less.

In some embodiments, the median particle diameter of the cathode active material may be 0.5 $\mu$m to 3.0 $\mu$m.

In some embodiments, the median particle diameter of the anode active material may be 10 $\mu$m or less.

In some embodiments, the median particle diameter of the anode active material may be 3.0 $\mu$m to 6.5 $\mu$m.

In some embodiments, Sn may be defined by Equation 1.

$$[\text{Equation 1}]$$

$$Sn = (Dn90 - Dn10) / Dn50$$

In Equation 1, Dn50 may be the median particle diameter of the anode active material, Dn90 may be the particle diameter at a cumulative volume fraction of 90% in a volume-based particle size distribution of the anode active material accumulated in order of increasing particle diameter, and Dn10 may be the particle diameter at a cumulative volume fraction of 10% in the volume-based particle size distribution of the anode active material accumulated in order of increasing particle diameter.

In some embodiments, Sp may be defined by Equation 2.

$$[\text{Equation 2}]$$

$$Sp = (Dp90 - Dp10) / Dp50$$

In Equation 2, Dp50 may be the median particle diameter of the cathode active material, Dp90 may be the particle diameter at a cumulative volume fraction of 90% in a volume-based particle size distribution of the cathode active material accumulated in order of increasing particle diameter, and Dp10 may be the particle diameter at a cumulative volume fraction of 10% in the volume-based particle size distribution of the cathode active material accumulated in order of increasing particle diameter.

In some embodiments, a ratio (Sp/Sn) of the span value of the cathode active material to that of the anode active material may be 0.5 to 0.95.

In some embodiments, the span value (Sp) of the cathode active material may be 0.3 to 1.5.

In some embodiments, the span value (Sn) of the anode active material may be 0.5 to 2.2.

In some embodiments, the cathode may include a cathode current collector, and a cathode active material layer formed on the cathode current collector and including the cathode active material, and the anode may include an anode current collector, and an anode active material layer formed on the anode current collector and including the anode active material.

In some embodiments, the lithium secondary battery may further include a separation membrane interposed between the cathode and the anode.

A lithium secondary battery may include: a cathode including a cathode active material having a median particle diameter (Dp50) of 5.5 $\mu$m or less; and an anode disposed to face the cathode and including an anode active material having a median particle diameter (Dn50) of 10 $\mu$m or less, wherein a ratio (Dp50/Dn50) of the median particle diameter of the cathode active material to that of the anode active material may be greater than 0.4 and 0.5 or less.

[Advantageous effects]

The lithium secondary battery according to embodiments of the present disclosure may include a cathode including a cathode active material and an anode including an anode active material. The ratio of the median particle diameter of the cathode active material to that of the anode active material may be adjusted within a predetermined range. Accordingly, the lithium secondary battery may have a high energy density while exhibiting improved output properties and high-temperature stability.

The ratio of the span value of the cathode active material to that of the anode active material may be adjusted within a predetermined range. As the particle size distributions of the cathode active material and the anode active material are adjusted within a predetermined range, the stability and cycle life properties of the cathode may be improved, while the output properties and efficiency of the anode may be enhanced.

[Brief Description of Drawings]

FIG. 1 is a schematic plan view illustrating a lithium secondary battery according to exemplary embodiments.

FIG. 2 is a schematic cross-sectional view illustrating the lithium secondary battery according to exemplary embodiments.

[Mode for Carrying out Invention]

Embodiments of the present disclosure provide a lithium secondary battery which includes a cathode including a cathode active material and an anode including an anode active material.

The lithium secondary battery according to the embodiments of the present disclosure may be widely applied in green technology fields, such as electric vehicles, battery charging stations, as well as solar power generation, wind power generation, and the like, which use the batteries. In addition, the lithium secondary battery according to the embodiments of the present disclosure may be used in eco-friendly electric vehicles, hybrid vehicles, and the like, which are aimed at mitigating climate change by reducing air pollution and greenhouse gas emission.

Hereinafter, the embodiments of the present disclosure will be described in detail. However, these embodiments are merely examples, and the present disclosure is not limited to the specific embodiments described as example.

The lithium secondary battery according to the exemplary embodiments may include a cathode and an anode. The cathode and the anode may be disposed to face each other.

The cathode may include a cathode active material, and the anode may include an anode active material. The cathode active material and the anode active material may include a compound capable of reversibly intercalating and deintercalating lithium ions.

A ratio (Dp50/Dn50) of a median particle diameter (Dp50) of the cathode active material to a median particle diameter (Dn50) of the anode active material may be 0.3 to 0.5.

For example, the "median particle diameter (D50)" may refer to the particle diameter at a cumulative volume fraction of 50% in a volume-based particle size distribution obtained by accumulating the particles in order of increasing particle diameter. The "particle diameter" may refer to the longest diameter of a particle.

For example, the diameter of a particle may be measured using a laser diffraction particle size distribution measuring device, or may be measured using an electron microscope such as a scanning electron microscope (SEM) or a transmission electron microscope (TEM).

As the median particle diameter ratio (Dp50/Dn50) of the cathode active material and the anode active material falls within the above-described range, the internal resistance of the lithium secondary battery may be reduced, and the output properties and high-temperature stability may be enhanced.

For example, if the ratio of the median particle diameter of the cathode active material to that of the anode active material is less than 0.3, the migration distance of lithium ions in the cathode may increase, and the reaction area on the surface of the cathode active material may relatively increase. Therefore, the reaction may become concentrated on the cathode, which may increase side reactions or cause defects in the cathode active material, thereby deteriorating the cycle life properties and high-temperature stability of the lithium secondary battery.

For example, if the ratio of the median particle diameter of the cathode active material to that of the anode active material exceeds 0.5, the lengths of the conductive paths in the cathode and the anode may become relatively similar, which may cause the resistance in the anode to rapidly increase during charging and discharging of the lithium secondary battery. In addition, since the reaction area of the cathode active material becomes relatively small, the capacity and output properties of the lithium secondary battery may deteriorate.

The reaction potential ranges and the extent of irreversible reactions of the cathode and anode may be appropriately adjusted within the above-described Dp50/Dn50 range. Accordingly, the lithium ionic conductivity of the cathode and anode may be increased, the internal resistance of the lithium secondary battery may be reduced, and the thermal and chemical stability may be improved.

In some embodiments, the ratio of the median particle diameter of the cathode active material to that of the anode active material may be 0.35 to 0.5, for example, 0.4 or more and less than 0.5, greater than 0.4 and 0.5 or less, or 0.4 to 0.45.

Within the above range, the internal resistance of the lithium secondary battery may be further reduced, the room-temperature output and low-temperature output properties may be further improved, and the high-temperature stability of the cathode may be enhanced, thereby further improving the high-temperature cycle life properties of the lithium secondary battery.

In some embodiments, the median particle diameter of the cathode active material may be greater than 0 $\mu$m and 5.5 $\mu$m or less. If the median particle diameter of the cathode active material exceeds 5.5 $\mu$m, the specific surface area of the cathode active material may be reduced, and the surface reaction area may be decreased. Therefore, pathways for lithium ion migration within the cathode may not be sufficiently secured, and the room-temperature and low-temperature output properties may deteriorate.

In one embodiment, the median particle diameter of the cathode active material may be 3.0 $\mu$m or less. Accordingly, the cathode may have a large reaction area, thereby further improving the output, energy density, and efficiency of the lithium secondary battery. In addition, even if the cathode active material has the above-described small median particle diameter, the deterioration in heat resistance and chemical stability of the cathode active material may be suppressed, since the value of Dp50/Dn50 falls within the above-described range.

In one embodiment, the median particle diameter of the cathode active material may be 0.5 $\mu$m or more. Accordingly, cracking and degradation of the cathode active material caused by side reactions between the cathode and the electrolyte may be suppressed, and the capacity loss of the cathode may be reduced.

In some embodiments, the median particle diameter of the anode active material may be 1 $\mu$m to 10 $\mu$m. If the median particle diameter of the anode active material exceeds 10 $\mu$m, the diffusion of lithium ions may be hindered, resulting in reduced output and energy density. In addition, if the median particle diameter of the anode active material is less than 1 $\mu$m, side reactions may increase due to the large reaction area, and the volume of the anode may expand during repeated charging and discharging.

In one embodiment, the median particle diameter of the anode active material may be 3.0 $\mu$m to 6.5 $\mu$m. Within the above range, the volume expansion of the anode active material may be suppressed, and the lithium ionic conductivity may be improved, thereby reducing the internal resistance and increasing the charge and discharge efficiency of the anode.

According to exemplary embodiments, the span value of the anode active material may be greater than that of the cathode active material. For example, a ratio (Sp/Sn) of a span value (Sp) of the cathode active material to a span value (Sn) of the anode active material may be less than 1. The "span value" may refer to the ratio of the difference between the D90 particle diameter and the D10 particle diameter to the D50 particle diameter of the active material.

For example, the span values of the anode active material and the cathode active material may be defined by Equations 1 and 2, respectively.

$$[\text{Equation 1}]$$

$$Sn = (Dn90 - Dn10) / Dn50$$

In Equation 1, Dn50 may be the median particle diameter of the anode active material, Dn90 may be the particle diameter at a cumulative volume fraction of 90% in a volume-based particle size distribution of the anode active material accumulated in order of increasing particle diameter, and Dn10 may be the particle diameter at a cumulative volume fraction of 10% in the volume-based particle size distribution of the anode active material accumulated in order of increasing particle diameter.

$$[\text{Equation 2}]$$

$$Sp = (Dp90 - Dp10) / Dp50$$

In Equation 2, Dp50 may be the median particle diameter of the cathode active material, Dp90 may be the particle diameter at a cumulative volume fraction of 90% in a volume-based particle size distribution of the cathode active material accumulated in order of increasing particle diameter, and Dp10 may be the particle diameter at a cumulative volume fraction of 10% in the volume-based particle size distribution of the cathode active material accumulated in order of increasing particle diameter.

Within the above-described span value ratio range, the porosity and specific surface area of the cathode and anode may be appropriately maintained. Accordingly, the ionic conductivity and energy density of the cathode and anode may be enhanced, and the structural and chemical stability of the cathode may be improved.

In addition, the reactivity between the cathode and the anode may be appropriately maintained, and the concentration of the reaction on the cathode or the anode may be prevented, thereby suppressing degradation and side reactions of the active material. Therefore, capacity loss in the cathode and anode may be suppressed even during repeated charging and discharging and high-temperature operation, and the output properties may be improved.

In some embodiments, the ratio (Sp/Sn) of the span value of the cathode active material to that of the anode active material may be 0.5 to 0.99, 0.5 to 0.95, or 0.8 to 0.95. Within the above range, the room-temperature and low-temperature output properties and high-temperature stability of the lithium secondary battery may be further improved.

In some embodiments, the span value (Sp) of the cathode active material may be 0.3 to 1.5. Within the above range, the chemical stability of the cathode may be further enhanced, and gas generation in the cathode may be suppressed even during repeated charging and discharging at high temperatures. Accordingly, the high-temperature operation stability and cycle life properties of the lithium secondary battery may be further improved.

For example, the span value of the cathode active material may be 0.5 to 1.3, 0.5 to 1.0, or 0.6 to 0.95. Within the above range, the particle diameter deviation within the cathode active material may be appropriately adjusted, thereby further improving the high-temperature cycle life properties and output properties of the lithium secondary battery.

In some embodiments, the span value (Sn) of the anode active material may be 0.5 to 2.2. Within the above range, the anode density and the packing properties of the anode active materials within the anode may be appropriately adjusted, and the pathways for lithium ion migration may be sufficiently secured. Accordingly, the output properties and efficiency of the lithium secondary battery may be further improved.

For example, the span value of the anode active material may be 0.5 to 1.5, 0.6 to 1.1, or 0.7 to 0.9. Within the above range, the particle diameter deviation within the anode active material may be appropriately adjusted, and an increase in resistance within the anode may be further suppressed, thereby further improving the charging and discharging performance of the lithium secondary battery.

In some embodiments, the Dp10 of the cathode active material may be 0.5 $\mu$m to 3.5 $\mu$m, or 1 $\mu$m to 3 $\mu$m. In some embodiments, the Dp90 of the cathode active material may be 3 $\mu$m to 11 $\mu$m, 3 $\mu$m to 9 $\mu$m, or 3 $\mu$m to 6 $\mu$m. Within the above ranges, the content of fine particles in the cathode active material may be controlled, thereby further improving stability and preventing a decrease in the ionic conductivity and energy density of the cathode caused by coarse particles.

In some embodiments, the Dn10 of the anode active material may be 2 $\mu$m to 6 $\mu$m, or 3 $\mu$m to 5 $\mu$m. In some

embodiments, the Dn90 of the anode active material may be 8 μm to 25 μm, or 9 μm to 12 μm. Within the above range, the volume expansion of the anode active material and the resulting generation of cracks may be suppressed, and the packing properties of the anode may be enhanced, thereby further improving the electrode density and output properties.

For example, the particle size distribution of the cathode active material and the anode active material may be adjusted by the particle size and elemental composition ratio of a precursor (e.g., an NCM precursor), the heat treatment temperature, heat treatment time, and heating rate in the heat treatment or calcination process, the pressure and duration in the pulverization process, and the sieve size and pressure in the sieving or classification process, which are used during preparation of the active material particles.

In some embodiments, the electrode density of the cathode may be 3.0 g/cc to 3.9 g/cc, and may be, for example, 3.4 g/cc to 3.8 g/cc.

In some embodiments, the electrode density of the anode may be 1.2 g/cc to 1.8 g/cc, and may be, for example, 1.3 g/cc to 1.7 g/cc.

Within the electrode density range, the reactivity between the cathode and the anode may be appropriately adjusted, and the output and high-temperature storage properties of the lithium secondary battery may be further improved.

The cathode active material may include a lithium metal oxide. For example, the cathode active material may include one or more compounds selected from a lithium cobalt-based oxide, a lithium manganese-based oxide, a lithium nickel-based oxide, or a lithium composite oxide.

For example, the cathode active material may include layered compounds such as a lithium cobalt oxide ($LiCoO_2$) or lithium nickel oxide ($LiNiO_2$); a lithium manganese oxide such as $LiMnO_3$, $LiMn_2O_3$, and $LiMnO_2$; a lithium copper oxide ($Li_2CuO_2$); a vanadium oxide such as $LiV_3O_8$, $LiFe_3O_4$, $V_2O_5$, and $Cu_2VO_7$; and a lithium iron phosphate oxide such as $LiFePO_4$.

In some embodiments, the cathode active material may include a compound represented by Formula 1 below.

[Formula 1]     $Li_aNi_bM_{1-b}O_2$

In Formula 1, a and b may satisfy $0.95 \leq a \leq 1.08$, $0.5 \leq b < 1$, and M may be at least one element of Na, Mg, Ca, Y, Ti, Zr, Hf, V, Nb, Ta, Cr, Mo, W, Mn, Co, Fe, Cu, Ag, Zn, B, Al, Ga, C, Si, Sn, Ba and Sr.

In one embodiment, the cathode active material includes nickel (Ni) and may further include at least one of cobalt (Co) or manganese (Mn). For example, a nickel-cobalt-manganese (NCM)-based lithium oxide may be used as the cathode active material.

For example, nickel (Ni) may be provided as a metal associated with the capacity of the lithium secondary battery. The higher the content of nickel, the greater the improvement in capacity and output of the lithium secondary battery. However, if the content of nickel increases excessively, the cycle life of the lithium secondary battery may be reduced, and it can be disadvantageous in terms of mechanical and electrical stability.

In one embodiment, the conductivity or resistance of the cathode may be improved by cobalt (Co), as well as the mechanical and electrical stability of the cathode may be improved by manganese (Mn).

The chemical structure represented by Formula 1 shows a bonding relationship between elements included in the lattice structure or crystal structure of the cathode active material, and does not exclude other additional elements. For example, M may be provided as a main active element of the cathode active material. Here, it should be understood that Formula 1 is provided to express the bonding relationship between the main active elements, and is a formula encompassing the introduction and substitution of the additional elements.

In one embodiment, the cathode active material may further include auxiliary elements which are added to the main active elements, in order to enhance chemical stability thereof or the crystal structure. The auxiliary element may be incorporated into the crystal structure together to form a bond, and it should be understood that this case is also included within the chemical structure represented by Formula 1.

For example, the anode active material may include a material capable of intercalating and deintercalating lithium ions. For example, the anode active material may include a lithium alloy, a carbon-based active material, a silicon-based active material, and the like, and these may be used alone or in combination of two or more thereof.

For example, the lithium alloy may include aluminum, zinc, bismuth, cadmium, antimony, silicon, lead, tin, gallium, indium and the like.

In one embodiment, the carbon-based active material may include crystalline carbon, amorphous carbon, a carbon composite, carbon fibers, etc. For example, the amorphous carbon may include hard carbon, cokes, mesocarbon microbeads (MCMB), mesophase pitch-based carbon fibers (MPCF), etc. For example, the crystalline carbon may include natural graphite, artificial graphite, graphite cokes, graphite MCMB, graphite MPCF, etc.

In one embodiment, the anode active material may include a silicon-based active material. For example, the silicon-based active material may include Si, SiOx (0<x<2), Si/C, SiO/C, Si-metal, etc. The capacity of the lithium secondary battery may be increased by the silicon-based active material.

In some embodiments, each of the cathode active material and the anode active material may have the form of a single particle, a secondary particle, or a mixture thereof.

The single particles and secondary particles may be distinguished based on the morphology of the particles. For example, the single particles and the secondary particles may be identified based on cross-sectional images of the particles obtained using a scanning electron microscope (SEM).

The secondary particle may refer to a particle in which a plurality of primary particles are aggregated and observed or regarded as substantially one particle. For example, in the case of the secondary particles, the boundaries of the primary particles may be observed in the SEM cross-sectional images.

In one embodiment, the secondary particles may be aggregated with greater than 10, 30 or more, 50 or more, or 100 or more primary particles.

The single particle may refer to a monolithic particle that is not an aggregate. For example, in the case of the single particle, unlike the secondary particle, the boundaries of the primary particles may not be observed in the SEM cross-sectional images.

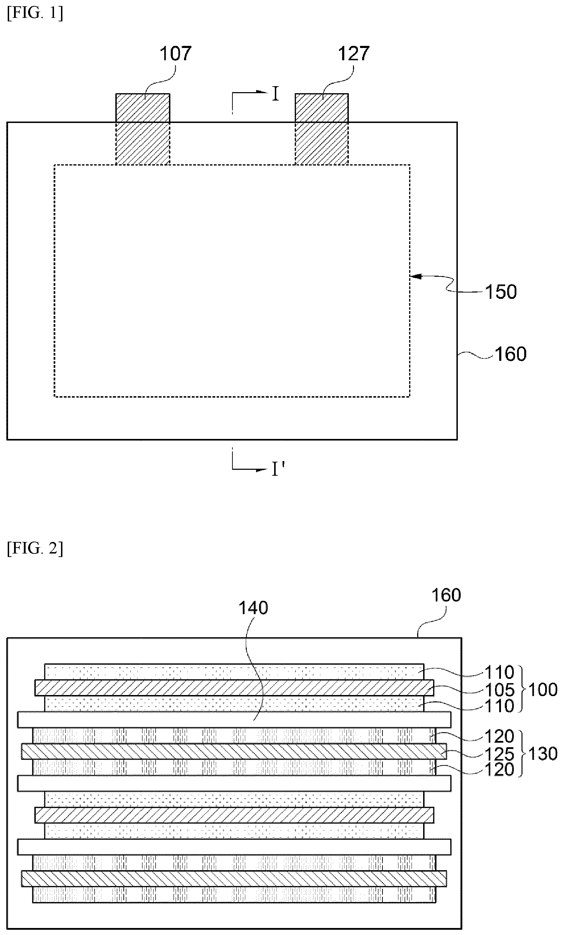

Hereinafter, a lithium secondary battery which includes a cathode including the cathode active material for a lithium secondary battery will be described with reference to FIGS. 1 and 2.

Referring to FIGS. 1 and 2, the lithium secondary battery may include a cathode 100 and an anode 130 disposed to face the cathode 100.

The cathode 100 may include a cathode active material layer 110 formed by applying the above-described cathode active material to at least one surface of the cathode current collector 105.

For example, a cathode slurry may be prepared by mixing the cathode active material with a binder, a conductive material, and/or a dispersant in a solvent, followed by stirring the same. The prepared cathode slurry may be applied to the cathode current collector 105, then dried and roll-pressed to prepare the cathode 100.

The cathode current collector 105 may include stainless steel, nickel, aluminum, titanium, or an alloy thereof. The cathode current collector 105 may also include aluminum or stainless steel having a surface treated with carbon, nickel, titanium, or silver.

The binder may include, for example, an organic binder such as vinylidene fluoride-hexafluoropropylene copolymer (PVDF-co-HFP), polyvinylidene fluoride (PVDF), polyacrylonitrile, polymethyl methacrylate, etc., or an aqueous binder such as styrene-butadiene rubber (SBR), and may be used together with a thickener such as carboxymethyl cellulose (CMC).

For example, a PVDF-based binder may be used as a binder for forming the cathode. In this case, the amount of the binder for forming the cathode active material layer 110 may be reduced and the amount of the cathode active material may be relatively increased. Thereby, the output and capacity of the secondary battery may be improved.

The conductive material may be included to facilitate electron migration between the active material particles. For example, the conductive material may include carbon-based conductive materials such as graphite, carbon black, graphene, or carbon nanotubes and/or metal-based conductive materials, including perovskite materials, such as tin, tin oxide, titanium oxide, $LaSrCoO_3$, and $LaSrMnO_3$, etc.

The anode 130 may include an anode active material layer 120 formed by applying the above-described anode active material to at least one surface of an anode current collector 125.

The anode current collector 125 may include, for example, gold, stainless steel, nickel, aluminum, titanium, copper, or an alloy thereof, and preferably includes copper or a copper alloy.

In some embodiments, an anode slurry may be prepared by mixing the active material with a binder, a conductive material and/or a dispersant in a solvent. The slurry may be applied to the anode current collector 125, followed by drying and compression to prepare the anode 130.

As the binder and the conductive material, materials which are substantially the same as or similar to the above-described materials may be used. In some embodiments, a binder for forming an anode may include, for example, an aqueous binder such as styrene-butadiene rubber (SBR) to ensure compatibility with a carbon-based active material, and may be used together with a thickener such as carboxymethyl cellulose (CMC).

In some embodiments, a separation membrane 140 may be interposed between the cathode 100 and the anode 130. The separation membrane 140 may include a porous polymer film made of a polyolefin polymer such as ethylene homopolymer, propylene homopolymer, ethylene/butene copolymer, ethylene/hexene copolymer, ethylene/methacrylate copolymer. The separation membrane 140 may include a nonwoven fabric made of glass fibers having a high melting point, polyethylene terephthalate fibers, etc.

According to exemplary embodiments, an electrode cell may be defined by the cathode 100, the anode 130 and the separation membrane 140, and a plurality of electrode cells are stacked to form, for example, an electrode assembly 150. For example, the electrode assembly 150 may be formed by winding, stacking, z-folding, stack-folding, etc. the separation membrane 140.

The electrode assembly may be housed in a case 160 together with the electrolyte to define a lithium secondary battery. According to exemplary embodiments, a non-aqueous electrolyte may be used as the electrolyte.

The non-aqueous electrolyte may include a lithium salt of an electrolyte and an organic solvent, the lithium salt is represented by, for example, $Li^+X^-$, and as an anion ($X^-$) of the lithium salt, $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$, etc. may be exemplified.

As the organic solvent, for example, propylene carbonate (PC), ethylene carbonate (EC), diethyl carbonate (DEC), dimethyl carbonate (DMC), ethyl methyl carbonate (EMC), methyl propyl carbonate, dipropyl carbonate, dimethyl sulfoxide, acetonitrile, dimethoxyethane, diethoxyethane, vinylene carbonate, sulfolane, $\gamma$-butyrolactone, propylene sulfite, tetrahydrofuran, and the like may be used. These compounds may be used alone or in combination of two or more thereof.

As illustrated in FIG. 1, electrode tabs (a cathode tab and an anode tab) protrude from the cathode current collector 105 and the anode current collector 125, respectively, which belong to each electrode cell, and may extend to one side of the outer case 160. The electrode tabs may be fused together with the one side of the outer case 160 to form electrode leads (a cathode lead 107 and an anode lead 127) that extend or are exposed to an outside of the outer case 160.

The lithium secondary battery may be manufactured, for example, in a cylindrical shape using a can, a prismatic shape, a pouch shape or a coin shape.

Hereinafter, embodiments of the present invention will be further described with reference to specific experimental examples. However, the following examples and comparative examples included in the experimental examples are only given for illustrating the present invention and those skilled in the art will obviously understand that various alterations and modifications are possible within the scope and spirit of the present invention. Such alterations and modifications are duly included in the appended claims.

**Preparative Example**

**(1) Preparation of cathode active material**

**Cathode active material A1**

$NiSO_4$, $CoSO_4$ and $MnSO_4$ were mixed at a molar ratio of 60:10:30 in distilled water from which dissolved oxygen had been removed by bubbling $N_2$ through it for 24 hours to prepare a mixed solution.

The mixed solution, NaOH and $NH_4OH$ were introduced into a reactor, and a coprecipitation reaction was performed for 60 hours to prepare metal hydroxide particles of $Ni_{0.6}Co_{0.1}Mn_{0.3}(OH)_2$.

The metal hydroxide particles and lithium hydroxide were added to a dry high-speed mixer at a molar ratio of 1:1.03 to prepare a mixture.

The mixture was placed in a calcination furnace, and the temperature of the calcination furnace was increased to 950°C at a rate of 2 °C/min, followed by calcination at 950°C for 10 hours. Oxygen gas was supplied at a flow rate of 10 mL/min during the calcination.

After completion of the calcination, the calcined product was naturally cooled to room temperature, and then pulverized and classified to obtain cathode active material A1 ($LiNi_{0.6}Co_{0.1}Mn_{0.3}O_2$) having a particle size distribution shown in Table 1 below.

**Cathode active materials A2 to A4**

Cathode active materials A2 to A4 were prepared in the same manner as cathode active material A1 except that the pulverization and classification were varied to obtain the particle size distributions shown in Table 1 below.

**(2) Preparation of anode active material**

**Anode active material B1**

After pulverizing cokes, the resulting powder was heat-treated at 3000 °C for 20 hours to prepare artificial graphite primary particles having a median particle diameter (D50) of 7.5 $\mu$m.

The artificial graphite primary particles and pitch were mixed at a ratio of 95:5, and then heat-treated at 800°C for 10 hours to prepare secondary particles in which the primary particles were assembled.

Thereafter, the secondary particles were heat-treated at 3000°C, cooled to room temperature, and then pulverized and classified to obtain anode active material B1 having the particle size distribution shown in Table 1 below.

**Anode active materials B2 to B4**

Anode active materials B2 to B4 were prepared in the same manner as anode active material B1 except that the pulverization and classification were varied to obtain the particle size distributions shown in Table 1 below.

**(3) Measurement of particle size distribution**

The volume-based particle size distributions of the cathode active material and anode active material prepared above were measured by the laser diffraction method using a laser diffraction particle size measuring device (Microtrac, MT 3000).

When accumulated in order of increasing particle diameter, D10 is the particle diameter at a cumulative volume fraction of 10%, D50 is the particle diameter at a cumulative volume fraction of 50%, and D90 is the particle diameter at a cumulative volume fraction of 90%.

SPAN (dimensionless) was calculated as (D90-D10) / D50.

The measurement results are shown in Table 1 below.

[TABLE 1]

|  | D10 ($\mu$m) | D50 ($\mu$m) | D90 ($\mu$m) | SPAN |
|---|---|---|---|---|
| Cathode active material A1 | 1.8 | 2.6 | 3.6 | 0.69 |
| Cathode active material A2 | 3.2 | 5.7 | 10.5 | 1.28 |
| Cathode active material A3 | 1.3 | 2.2 | 3.3 | 0.91 |
| Cathode active material A4 | 0.8 | 2.4 | 5.6 | 2.03 |
| Anode active material B1 | 4.9 | 6.0 | 9.9 | 0.83 |
| Anode active material B2 | 4.8 | 7.2 | 10.8 | 0.83 |
| Anode active material B3 | 4.1 | 7.0 | 11.2 | 1.01 |
| Anode active material B4 | 5.4 | 11.8 | 30.2 | 2.10 |

**Examples and Comparative Examples**

The cathode active material, Denka Black as a conductive material, and PVDF as a binder, described in Table 2 below, were mixed at a mass ratio of 93:5:2 to prepare a cathode slurry. An aluminum current collector was coated with the cathode slurry, then dried and roll-pressed to form a cathode active material layer. The target electrode density of the cathode active material layer was 3.7 g/cc.

The anode active material, KS6 as a conductive material, SBR as a binder, and CMC as a thickener, described in Table 2 below, were mixed at a mass ratio of 93:5:1:1 to prepare an anode slurry. A copper current collector was coated with the anode slurry, then dried and roll-pressed to form an anode active material layer. The target electrode density of the anode active material layer was 1.6 g/cc.

A separation membrane (polyethylene, thickness: 13 $\mu$m) was interposed between the cathode and the anode to form an electrode cell. The electrode cell was placed in an outer case and an electrolyte was injected, and the assembly was aged for 12 hours or more to allow the electrolyte to impregnate the electrodes. The electrolyte used herein was prepared by dissolving 1 M $LiPF_6$ in a mixed solvent of EC/EMC (30/70; volume ratio).

The ratio (D50 ratio) of the median particle diameter of the cathode active material to that of the anode active material and the ratio (SPAN ratio) of the span value of the cathode active material to that of the anode active material, used in each of the examples and comparative examples, were calculated and shown in Table 2.

[TABLE 2]

|  | Cathode active material | Anode active material | D50 ratio | SPAN ratio |
|---|---|---|---|---|
| Example 1 | A1 | B1 | 0.43 | 0.83 |
| Example 2 | A1 | B2 | 0.36 | 0.83 |
| Example 3 | A2 | B4 | 0.48 | 0.61 |
| Example 4 | A3 | B3 | 0.31 | 0.90 |

(continued)

|  | Cathode active material | Anode active material | D50 ratio | SPAN ratio |
|---|---|---|---|---|
| Comparative Example 1 | A2 | B1 | 0.95 | 1.54 |
| Comparative Example 2 | A2 | B2 | 0.79 | 1.54 |
| Comparative Example 3 | A1 | B3 | 0.33 | 1.97 |
| Comparative Example 4 | A4 | B4 | 0.20 | 0.95 |

**Experimental Example**

**(1) Measurement of DCIR**

For the lithium secondary batteries of the respective examples and comparative examples, charging and discharging were performed at each corresponding C-rate for 10 seconds, while the C-rate was sequentially varied to 0.2C, 0.5C, 1.0C, 1.5C, 2.0C, 2.5C and 3.0C at a 50% state-of-charge (SOC) point at 25°C. Then, the terminal voltage points were plotted to construct a linear equation, and the slope of the resulting line was adopted as the DCIR.
The evaluation results are shown in Table 3 below.

**(2) Room-temperature output properties**

The lithium secondary batteries according to the respective examples and comparative examples were charged (CC-CV 1C 4.2V 0.02C CUT-OFF) and discharged (CC 1C 2.5V CUT-OFF) at room temperature (25 °C) after the above-described formation charging and discharging, and the room temperature discharge capacity and room temperature charge capacity were measured. After the lithium secondary battery was charged to 40% of its discharge capacity (SOC 40%), the time taken to reach the lower limit voltage (2.5V) was measured by applying 1150 W of output in the discharge direction.
The evaluation results are shown in Table 3 below.

**(3) Low-temperature output properties**

The SOC of the lithium secondary battery was set in the same manner as for the room-temperature output properties, except that charging and discharging were performed in a chamber maintained at -15 °C.
The low-temperature discharge output properties of the lithium secondary batteries according to the above-described examples and comparative examples were evaluated in the same manner as the room-temperature output properties, except that an output of 462 W was applied.
The evaluation results are shown in Table 3 below.

**(4) High-temperature storage properties**

The lithium secondary batteries of the respective examples and comparative examples were charged (CC-CV 1.0C 4.2V 0.05C CUT-OFF) and discharged (CC 1.0C 2.5V CUT-OFF) at room temperature to measure the initial discharge capacity. After that, the lithium secondary batteries were charged to 100% SOC and stored in a chamber at 60° C for 4 weeks.
After 4 weeks of storage, the lithium secondary battery was charged (CC-CV 1.0C 4.2V 0.05C CUT-OFF) and discharged (CC 1.0C 2.5V CUT-OFF) to measure the discharge capacity after storage. The high-temperature storage properties were calculated as the percentage of the discharge capacity after storage relative to the initial discharge capacity.
The evaluation results are shown in Table 3 below.

[TABLE 3]

|  | DCIR (mohm) | Room-temperature discharge output (sec) | Low-temperature discharge output (sec) | High-temperature storage properties (%) |
|---|---|---|---|---|
| Example 1 | 1.69 | 3.7 | 7.3 | 91.8 |
| Example 2 | 1.91 | 3.4 | 6.2 | 82.4 |

(continued)

|  | DCIR (mohm) | Room-temperature discharge output (sec) | Low-temperature discharge output (sec) | High-temperature storage properties (%) |
|---|---|---|---|---|
| Example 3 | 1.8 | 3.5 | 6.7 | 90.7 |
| Example 4 | 1.73 | 3.7 | 7 | 89.9 |
| Comparative Example 1 | 1.95 | 3.3 | 3.9 | 85.3 |
| Comparative Example 2 | 1.97 | 3 | 4.1 | 81 |
| Comparative Example 3 | 2 | 3.1 | 3.6 | 80.8 |
| Comparative Example 4 | 2.1 | 3 | 3.2 | 76.5 |

Referring to Tables 1 to 3, the secondary batteries according to the examples exhibited low internal resistance, and both the output properties at room temperature and at low temperatures were improved. In addition, the high-temperature storage properties of the lithium secondary batteries were enhanced.

On the other hand, the lithium secondary batteries according to the comparative examples exhibited high overall internal resistance, and either the output properties or high-temperature storage properties were degraded.

For example, Comparative Examples 1 and 2 showed degraded output properties because the D50 ratio and SPAN ratio did not fall within the above-described range, and the high-temperature cycle life properties were degraded despite the relatively high median particle diameter of the cathode active material. In addition, each of Comparative Examples 3 and 4 showed high internal resistance and low output because the D50 ratio or SPAN ratio did not fall within the above-described range, and the high-temperature cycle life properties were significantly degraded due to the relatively small median particle diameter of the cathode active material.

**Claims**

1.    A lithium secondary battery comprising:

a cathode including a cathode active material; and
an anode including an anode active material and disposed to face the cathode,
wherein a ratio (Dp50/Dn50) of a median particle diameter (Dp50) of the cathode active material to a median particle diameter (Dn50) of the anode active material is 0.3 to 0.5, and
a ratio (Sp/Sn) of a span value (Sp) of the cathode active material to a span value (Sn) of the anode active material is less than 1.

2.    The lithium secondary battery according to claim 1, wherein the median particle diameter of the cathode active material is greater than 0 $\mu$m and 5.5 $\mu$m or less.

3.    The lithium secondary battery according to claim 2, wherein the median particle diameter of the cathode active material is 0.5 $\mu$m to 3.0 $\mu$m.

4.    The lithium secondary battery according to claim 1, wherein the median particle diameter of the anode active material is 10 $\mu$m or less.

5.    The lithium secondary battery according to claim 4, wherein the median particle diameter of the anode active material is 3.0 $\mu$m to 6.5 $\mu$m.

6.    The lithium secondary battery according to claim 1, wherein Sn and Sp are defined by Equations 1 and 2, respectively:

[Equation 1]

$$Sn = (Dn90 - Dn10) / Dn50$$

(in Equation 1, Dn50 is the median particle diameter of the anode active material, Dn90 is the particle diameter at a cumulative volume fraction of 90% in a volume-based particle size distribution of the anode active material accumulated in order of increasing particle diameter, and Dn10 is the particle diameter at a cumulative volume fraction of 10% in the volume-based particle size distribution of the anode active material accumulated in order of increasing particle diameter)

[Equation 2]

$$Sp = (Dp90 - Dp10) / Dp50$$

(in Equation 2, Dp50 is the median particle diameter of the cathode active material, Dp90 is the particle diameter at a cumulative volume fraction of 90% in a volume-based particle size distribution of the cathode active material accumulated in order of increasing particle diameter, and Dp10 is the particle diameter at a cumulative volume fraction of 10% in the volume-based particle size distribution of the cathode active material accumulated in order of increasing particle diameter).

7. The lithium secondary battery according to claim 1, wherein a ratio (Sp/Sn) of the span value of the cathode active material to that of the anode active material is 0.5 to 0.95.

8. The lithium secondary battery according to claim 1, wherein the span value (Sp) of the cathode active material is 0.3 to 1.5.

9. The lithium secondary battery according to claim 1, wherein the span value (Sn) of the anode active material is 0.5 to 2.2.

10. The lithium secondary battery according to claim 1, wherein the cathode comprises a cathode current collector, and a cathode active material layer formed on the cathode current collector and including the cathode active material, and the anode comprises an anode current collector, and an anode active material layer formed on the anode current collector and including the anode active material.

11. The lithium secondary battery according to claim 1, further comprising a separation membrane interposed between the cathode and the anode.

12. A lithium secondary battery comprising:

a cathode comprising a cathode active material having a median particle diameter (Dp50) of 5.5 $\mu$m or less; and an anode disposed to face the cathode and comprising an anode active material having a median particle diameter (Dn50) of 10 $\mu$m or less, wherein a ratio (Dp50/Dn50) of the median particle diameter of the cathode active material to that of the anode active material is greater than 0.4 and 0.5 or less.

13. The lithium secondary battery according to claim 12, wherein a ratio of a span value (Sp) of the cathode active material defined by Equation 2 to a span value (Sn) of the anode active material defined by Equation 1 is less than 1:

[Equation 1]

$$Sn = (Dn90 - Dn10) / Dn50$$

(in Equation 1, Dn50 is the median particle diameter of the anode active material, Dn90 is the particle diameter at a cumulative volume fraction of 90% in a volume-based particle size distribution of the anode active material accumulated in order of increasing particle diameter, and Dn10 is the particle diameter at a cumulative volume fraction of 10% in the volume-based particle size distribution of the anode active material accumulated in order of increasing particle diameter)

[Equation 2]

$$Sp = (Dp90 - Dp10) / Dp50$$

(in Equation 2, Dp50 is the median particle diameter of the cathode active material, Dp90 is the particle diameter at a cumulative volume fraction of 90% in a volume-based particle size distribution of the cathode active material accumulated in order of increasing particle diameter, and Dp10 is the particle diameter at a cumulative volume fraction of 10% in the volume-based particle size distribution of the cathode active material accumulated in order of increasing particle diameter).

[FIG. 1]

[FIG. 2]

## INTERNATIONAL SEARCH REPORT

| International application No. |
|---|
| **PCT/KR2023/018168** |

### A. CLASSIFICATION OF SUBJECT MATTER

**H01M 4/13**(2010.01)i; **H01M 10/052**(2010.01)i; **H01M 4/525**(2010.01)i; **H01M 4/505**(2010.01)i; **H01M 4/587**(2010.01)i; **H01M 4/02**(2006.01)i

According to International Patent Classification (IPC) or to both national classification and IPC

### B. FIELDS SEARCHED

Minimum documentation searched (classification system followed by classification symbols)

H01M 4/13(2010.01); H01M 10/052(2010.01); H01M 10/0525(2010.01); H01M 10/40(2006.01); H01M 4/02(2006.01); H01M 4/36(2006.01); H01M 4/38(2006.01); H01M 4/505(2010.01); H01M 4/525(2010.01); H01M 4/66(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬이차전지(lithium secondary battery), 양극(cathode), 음극(anode), 양극활물질 (cathode active material), 음극활물질(anode active material), 평균입경(average diameter, D50), 스팬 값(span value)

### C. DOCUMENTS CONSIDERED TO BE RELEVANT

| Category* | Citation of document, with indication, where appropriate, of the relevant passages | Relevant to claim No. |
|---|---|---|
| X | CN 109449446 A (NINGDE CONTEMPORARY AMPEREX TECHNOLOGY CO., LTD.) 08 March 2019 (2019-03-08)<br>See claims 1, 3, 5-6 and 8; paragraphs [0033] and [0037]; tables 1-2; and example 12. | 1-13 |
| A | CN 101207190 A (BYD CO., LTD.) 25 June 2008 (2008-06-25)<br>See tables 1-2. | 1-13 |
| A | CN 106099080 A (SHANDONG WINA GREEN POWER TECHNOLOGY CO., LTD. et al.) 09 November 2016 (2016-11-09)<br>See entire document. | 1-13 |
| A | JP 2017-152177 A (AUTOMOTIVE ENERGY SUPPLY CORP.) 31 August 2017 (2017-08-31)<br>See entire document. | 1-13 |
| A | KR 10-2022-0127242 A (SUMITOMO CHEMICAL CO., LTD.) 19 September 2022 (2022-09-19)<br>See entire document. | 1-13 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **15 February 2024** | **16 February 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

EP 4 629 312 A1

**INTERNATIONAL SEARCH REPORT**
Information on patent family members

International application No.

**PCT/KR2023/018168**

| Patent document cited in search report | | | Publication date (day/month/year) | Patent family member(s) | | | Publication date (day/month/year) |
|---|---|---|---|---|---|---|---|
| CN | 109449446 | A | 08 March 2019 | CN | 109449446 | B | 11 September 2020 |
| | | | | WO | 2020-078357 | A1 | 23 April 2020 |
| CN | 101207190 | A | 25 June 2008 | | None | | |
| CN | 106099080 | A | 09 November 2016 | | None | | |
| JP | 2017-152177 | A | 31 August 2017 | JP | 6618387 | B2 | 11 December 2019 |
| KR | 10-2022-0127242 | A | 19 September 2022 | CN | 114982015 | A | 30 August 2022 |
| | | | | EP | 4092784 | A1 | 23 November 2022 |
| | | | | JP | 2021-114406 | A | 05 August 2021 |
| | | | | JP | 6734491 | B1 | 05 August 2020 |
| | | | | US | 2023-0118425 | A1 | 20 April 2023 |
| | | | | WO | 2021-145438 | A1 | 22 July 2021 |

Form PCT/ISA/210 (patent family annex) (July 2022)

16